# EUROPEAN PATENT SPECIFICATION

(11) **EP 3 451 274 B1**
(45) Date of publication and mention of the grant of the patent: **10.11.2021**
(21) Application number: 18182508.4
(22) Date of filing: 09.07.2018
(51) Int. Cl.: G06Q 50/06, G01D 4/00, G01F 15/06, G01F 15/075, G01R 21/133

(54) **METHOD FOR SEPARATELY DETECTING AMOUNT OF UTILITY, ELECTRIC POWER, AND WATER CONSUMPTION FOR RESPECTIVE DEVICES**
VERFAHREN ZUR GETRENNTEN ERFASSUNG DES VERSORGUNGS-, STROM- UND WASSERVERBRAUCHS FÜR ENTSPRECHENDE VORRICHTUNGEN
PROCÉDÉ DE DÉTECTION SÉPARÉE DE LA CONSOMMATION D'ÉLECTRICITÉ ET D'EAU POUR DES DISPOSITIFS RESPECTIFS

(30) Priority: 01.09.2017 KR 20170111605
(43) Date of publication of application: 06.03.2019
(73) Proprietor: Korea Institute of Energy Research, Daejeon 34129 (KR)
(72) Inventor: LEE, Jae Yong, 34138 DAEJEON (KR); OH, Sea Seung, 35247 DAEJEON (KR); CHOI, Jae Jun, 34140 DAEJEON (KR)
(74) Representative: Brevalex

(56) References cited:
- US-A1- 2011 251 807
- US-A1- 2013 147 635
- US-A1- 2014 347 077

## Description

### CROSS REFERENCE TO RELATED APPLICATION

This application claims priority from Korean Patent Application No. 10-2017-0111605, filed on September 1, 2017.

### BACKGROUND OF THE INVENTION

### 1. Field of the invention

The present disclosure relates to a technique for detecting the amount of utility consumption.

### 2. Description of the Prior Art

A tap-water meter and a hot-water meter among facility meters for an apartment measure the cumulative amount of tap water and hot water consumption for respective households. Further, each utility provider reads a tap-water meter and a hot-water meter for each household, and levies a charge according to the cumulative amount of consumption for each household. As a specific example, a utility provider checks the cumulative amount of consumption using facility meters of respective households at the end of each cycle, for example, every month, and levies a charge accordingly. In the past, a manual meter-reading scheme, in which a person directly visits each household once a month to check the cumulative measurement value, was common. However, recently, a remote meter-reading scheme, in which the amount of electric power/gas/tap water/heating/hot water consumption can be checked for each household at any time by using a communication scheme involving a connection with a meter-reading system installed in a management room, has been widely distributed.

For simple charging, a meter value can be read only once a month even for an apartment in which a remote meter-reading system has been established, however, in the case where a meter-reading cycle is set to be short, it is possible to check the amount of electric power/gas/tap water/heating/hot water consumption for a household according to time series.

However, according to a method for checking the amount of consumption by existing manual meter-reading or a method for recording and providing notification of only a final cumulative value for charging specific to each cycle even if the remote meter-reading scheme is employed, a user may be able to check the cumulative amount of consumption for each cycle, but it is difficult to check the amount of consumption by individual devices. For example, a user may be able to check the amount of tap water and hot water consumed a month, but may be unable to separately check the amount of tap water/hot water consumption for a washing machine and the amount of tap water/hot water consumption for a dishwasher.

In order to encourage appropriate use of utilities, such as tap water, hot water, electric power, etc., it is necessary to provide individual notification of the amount of consumption of each utility, but individual notification is difficult by the conventional method.

A utility meter may be installed for each device, but it is considered that there is no actual merit because the benefit of individual notification is not great compared to the installation cost of the utility meters.

Meanwhile, unlike a tap-water meter and a hot-water meter, in the technical field of an electric power meter, a variety of methods for separately detecting, from one measurement value, the amount of electric power consumption of respective devices have been studied variously.

A typical method is a pattern-matching method. The pattern-matching method is a method of finding a part corresponding to an electric power use pattern by a specific device in electric power amount data generated by an electric power meter, and allocating the amount of electric power consumption, which is identified in the corresponding part, as the amount of electric power consumed by the specific device. However, it is known that pattern-matching methods developed to date are not highly accurate.

US 2013/0147635 discloses utility monitoring systems and methods of use.

US 2014/0347077 discloses a utility metering method according to the preamble of claim 1.

US 2011/0251807 discloses an automatic detection of appliances.

### SUMMARY OF THE INVENTION

In view of the foregoing, an aspect of the present disclosure is to provide a technique to separately detect the amount of utility consumption by respective devices.

In another aspect, the present disclosure aims at providing a technique that enables improvement of the accuracy of separate detection of the amount of utility consumption by respective devices by analyzing a measurement value of a utility meter and a measurement value of an electric power meter in an integrated manner.

In still another aspect, the present disclosure aims at providing a technique that may motivate a user to reduce consumption of utilities by separately providing notification of the amount of utility consumption by respective devices.

In order to accomplish the above description, the present disclosure provides a method for separately detecting the amount of utility consumption by respective devices, according to claim 1.

The first device may be a washing machine or a dishwasher which uses the first-type water and the electric power at the same time.

Further, the first flow rate data may include the cumulative supply amount of the first-type water for each meter-reading time, and the electric power amount data may include the cumulative supply amount of the electric power for each meter-reading time.

The method may further include displaying, printing, or transmitting, to a user terminal, the cumulative amount of consumption during a first period for the first device together with the cumulative supply amount of the first-type water during said first period.

The method may further include generating second flow rate data by checking a flow rate of second-type water supplied through a second supply pipe, and may further include, when a use pattern for the second-type water by the first device is detected in the time interval through analysis of the second flow rate data, extracting the amount of consumption of the second-type water of the first device in the time interval.

A temperature of the first-type water and a temperature of the second-type water may be different.

In the method, the extracting of the amount of consumption of the first-type water and the amount of consumption of the electric power of the first device may include analyzing the total amount of the consumption of the first-type water for a predetermined time period or analyzing the amount of consumption of the first-type water per hour during the predetermined time period so as to determine whether the first device has used the first-type water, and analyzing the amount of the electric power per hour or analyzing a use period of the electric power so as to determine whether the first device has used the electric power.

The method may further include, when the use pattern for electric power by the first device is detected in a time interval subsequent to the time interval, extracting the amount of consumption of electric power of the first device.

The base load may be a standby electric power load or a refrigerator load, the periodic load may be an electric rice cooker load, and the first device may be a washing machine or a dishwasher.

As described above, according to the present disclosure, the amount of utility consumption can be separately detected for each device, a measurement value of a utility meter and a measurement value of an electric power meter may be analyzed in an integrated manner so as to improve the accuracy of separate detection of the amount of utility consumption by respective devices, and a user can be motivated to reduce utility consumption, by separately notifying of the amount of utility consumption by respective devices.

### BRIEF DESCRIPTION OF THE DRAWINGS

The above and other aspects, features and advantages of the present disclosure will be more apparent from the following detailed description taken in conjunction with the accompanying drawings, in which:
FIG. 1 is a utility connection diagram of a household according to an embodiment not covered by the claims;
FIG. 2 is a configuration diagram of a system for separately detecting the amount of utility consumption by respective devices according to another embodiment not covered by the claims;
FIG. 3 is a flowchart of a method for separately detecting the amount of utility consumption by respective devices according to an embodiment not covered by the claims;
FIG. 4 a graphical representation of an example of a value included in utility data;
FIG. 5 is a flowchart of a method for separately detecting the amount of utility consumption by respective devices according to an embodiment not covered by the claims;
FIG. 6 is a flowchart of a method for separately detecting the amount of electric power consumption by respective devices according to an embodiment of the present invention;
FIG. 7 is a flowchart of a method for separately detecting the amount of water consumption by each device according to an embodiment not covered by the claims; and
FIG. 8 is a diagram showing an example of separately providing notification of the amount of utility consumption by respective devices.

### DETAILED DESCRIPTION OF THE EXEMPLARY EMBODIMENTS

Hereinafter, embodiments of the present disclosure will be described in detail with reference to the accompanying drawings. In adding reference numerals to elements in each drawing, the same elements will be designated by the same reference numerals, if possible, although they are shown in different drawings. Further, in the following description of the present disclosure, a detailed description of known functions and configurations incorporated herein will be omitted when it is determined that the description may make the subject manner of the present disclosure rather unclear.

In addition, terms, such as first, second, A, B, (a), (b) or the like may be used herein when describing components of the present disclosure. These terms are merely used to distinguish one structural element from other structural elements, and a property, an order, a sequence and the like of a corresponding structural element are not limited by the term. It should be noted that if it is described in the specification that one component is "connected," "coupled" or "joined" to another component, a third component may be "connected," "coupled," and "joined" between the first and second components, although the first component may be directly connected, coupled or joined to the second component.

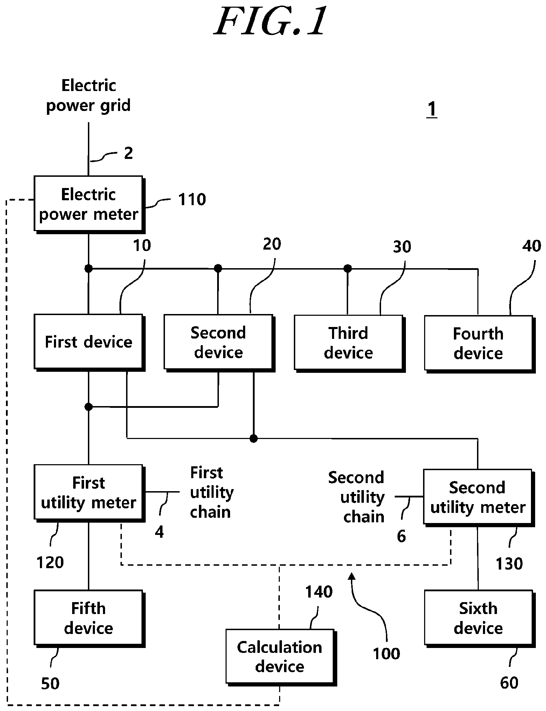

FIG. 1 is a utility connection diagram of a household according to an embodiment not covered by the claims.

Referring to FIG. 1, household (1) may be connected with a utility supply chain. The utility supply chain may be, for example, an electric power grid, a tap water supply chain (a first utility chain in FIG. 1), a hot water supply chain (a second utility chain in FIG. 1), and the like.

The household 1 may be connected with each of utility supply chains via meters. For example, the household 1 may be connected with an electric power grid via an electric power meter 110. Further, the household 1 may be connected with a first utility chain, for example, a tap water supply chain, via a first utility meter, for example, a tap-water meter, and may be connected with a second utility chain, for example, a hot water supply chain, via a second utility meter, for example, a hot-water meter.

Each meter may measure the amount of utility incoming through a single path. Here, the amount of utility measured at each meter may be a billing criterion of a utility provider.

As a specific example, the electric power meter 110 may measure the amount of electric power supplied through an electric power lead-in line 2. The electric power drawn into the household 1 is branched and supplied to each device, for example, a first device 10, a second device 20, a third device 30, and a fourth device 40, through a wiring network inside the household 1, wherein each branched electric power line may not have a meter, which measures electric power, installed therein.

As another example, the first utility meter 120 may measure the amount of first-type water supplied through a first supply pipe 4. Further, the first-type water is branched and supplied to each of devices, for example, the first device 10, the second device 20, and a fifth electronic device 50, through pipelines inside the household 1, wherein each of the branched pipelines may not have a meter, which measures the amount of the first-type water, installed therein.

As still another example, a second utility meter 130 may measure the amount of second-type water supplied through a second supply pipe 6. Further, the second-type water is branched and supplied to each of devices, for example, the first device 10, the second device 20, and a sixth device 60, through pipelines inside the household 1, wherein each of the branched pipelines may not have a meter, which measures the amount of the second-type water, installed therein.

There may be a device using two or more utilities from among devices of the household 1. For example, the first device 10 and the second device 20 in FIG. 1 may be examples of such devices.

The first device 10 may be, for example, a washing machine. The washing machine may receive electric power to operate, and may use tap water or hot water during operation.

The second device 20 may be, for example, a washing machine. The washing machine may receive electric power to operate, and may use tap water or hot water during operation.

A temperature of the first-type water and a temperature of the second-type water may be different. For example, the first-type water may be non-heated water, e.g., tap water, which is at room temperature, and the second-type water may be heated water, e.g., hot water.

The household 1 may receive and use electric power and first-type water, e.g., tap water, and may receive and use second-type water, e.g., hot water, in addition to electric power and first-type water.

A calculation device 140 may be connected with the meters 110, 120, and 130 within the household 1 to receive measurement values from the meters 110, 120, and 130 and analyze the received measurement values.

For example, the calculation device 140 may acquire first flow rate data corresponding to the supply amount of first-type water per hour from the first utility meter 120. Further, the calculation device 140 may acquire second flow rate data corresponding to the supply amount of second-type water per hour from the second utility meter 130. In addition, the calculation device 140 may acquire electric power amount data corresponding to the supply amount of electric power per hour from the electric power meter 110. Here, the supply amount per hour may be the supply amount in each meter-reading interval. For example, meter-reading may be performed every few seconds, and the described first flow rate data, second flow rate data, or electric power amount data may include a value corresponding to the amount supplied for few seconds (the meter-reading interval). In the following, an embodiment not covered by the claims will be described by mainly using an expression of the supply amount per hour, but the supply amount per meter-reading interval may also be applied to the embodiment in the same manner.

The first flow rate data corresponding to the supply amount per hour or to the supply amount per meter-reading interval may include, for example, an instantaneous supply amount, or may include a cumulative supply amount. The second flow rate data corresponding to the supply amount per hour or to the supply amount per meter-reading interval may include, for example, an instantaneous supply amount, or may include a cumulative supply amount. The electric power amount data corresponding to the supply amount per hour or to the supply amount per meter-reading interval may include, for example, an instantaneous supply amount, or may include a cumulative supply amount. When the utility meter or the electric power meter is an integrating meter, it may be easy to store the supply amount per hour or the supply amount per meter-reading interval in the form of a cumulative supply amount. However, since data may be transformed into various forms as needed, the first flow data, the second flow data, and the electric power amount data may be modified and used in various forms.

The calculation device 140 may separately detect the amount of utility consumption by respective devices by analyzing the acquired first flow rate data, second flow rate data, and electric power amount data in an integrated manner.

For example, the electronic device 140 may extract the amount of consumption of the first-type water and the amount of consumption of electric power of the first device 10 in a time interval in which a use pattern for the first type water by the first device 10 and a use pattern for the electric power by the first device 10 are concurrently detected, via analysis of the first flow rate data and the electric power amount data.

In a time interval in which an electric power use pattern of a device using electric power is detected, the amount of electric power consumption of the corresponding device may be separately detected via analysis of electric power amount data. However, when devices are operated in combination, there may be certain limitations in separately detecting the amount of electric power consumption by each device by analyzing the electric power amount data only.

The calculation device 140 according to an embodiment not covered by the claims may increase the accuracy of separate detection of the amount of utility consumption by respective devices, by analyzing the first flow rate data, the second flow rate data, and the electric power amount data in an integrated manner.

For example, in the same interval, when a water use pattern for the first device 10 is detected in the first flow rate data, and an electric power use pattern for the first device 10 is detected in the electric power amount data, the calculation device 140 may detect the amount of water consumption by the first device 10 in the first flow rate data and may detect the amount of electric power consumption by the first device 10 in the electric power amount data, in the corresponding time interval. On the contrary, in the same interval, when the electric power use pattern for the first device 10 is detected in the electric power amount data, but the water use pattern for the first device 10 is not detected in the first flow rate data, it may be assumed that the first device 10 is not operated in the corresponding time interval, and may analyze whether another device has consumed electric power in the corresponding time interval.

As another example, the calculation device 140 may identify a time interval in which the use pattern for the first-type water by the first device 10 and the use pattern for the electric power by the first device 10 are concurrently detected, via analysis of the first flow rate data and the electric power amount data. Further, when a use pattern for second-type water by the first device 10 is detected in a corresponding time interval via analysis of the second flow rate data, the calculation device 140 may extract the amount of consumption of the second-type water of the first device 10 in the corresponding interval.

The calculation device 140 may separately detect the amount of utility consumption by respective devices, and may transfer, to a user, information of the detected amount of utility consumption by respective devices.

For example, the calculation device 140 may display, via a display device, or print to provide the user with the cumulative amount of consumption by each device together with the cumulative supply amount of the first-type water, at each first period, e.g., every month. Alternatively, the calculation device 140 may transmit the cumulative amount of consumption by each device together with the cumulative supply amount of the first-type water to a user terminal, for example, a smartphone, at each first period.

The calculation device 140 may also display, print, or transmit, to the user terminal, the cumulative amount of consumption by each device together with the cumulative supply amount of the second watertype and the electric power in the same manner.

Meanwhile, the calculation device may be included in the household, but may be separately disposed from the household.

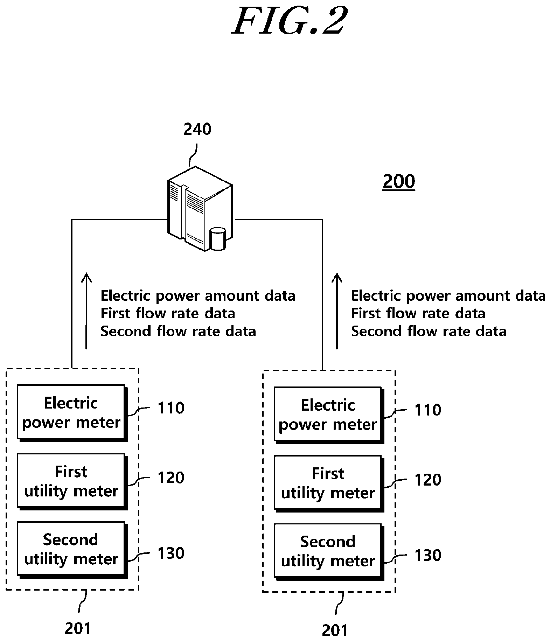

FIG. 2 is a configuration diagram of a system for separately detecting the amount of utility consumption by respective devices according to another embodiment not covered by the claims.

Referring to FIG. 2, a system 200 may include the electric power meter 110, the first utility meter 120, and the second utility meter 130, which are disposed in each household 201, and a calculation device 240 disposed outside of each household 201. Further, each household 201 may transmit, to the calculation device 240, electric power amount data generated by the electric power meter 110, first flow rate data generated by the first utility meter 120, and second flow rate data generated by the second utility meter 130.

The calculation device 240 may separately detect the amount of utility consumption by respective devices by analyzing the electric power amount data, first flow rate data, and second flow rate data in an integrated manner. As shown in an example described with reference to FIG. 1, with respect to a device using two or more utilities, when a utility use pattern (for example, a use pattern for first-type water, a use pattern for second-type water, a use pattern for electric power, etc.) of the same device is detected in different utility data (for example, electric power amount data, first flow rate data, second flow rate data, etc.), the calculation device 240 may determine that the corresponding device has consumed the utility in the detection time interval. Further, the calculation device 240 may extract the amount of utility consumption by the corresponding device in the time interval.

The calculation device 240 may be a part of a remote meter-reading system operated by a utility provider. The utility provider may check the amount of utility consumption for each household 201, and may notify a user of the same, wherein the utility provider notifies the user of the amount of utility consumption by respective devices, which is detected by the calculation device 240, together with billing details, so as to motivate the user to reduce utility consumption and provide the user with an additional service.

The utility provider may be a business operator that provides utilities for the apartment in a comprehensive manner. However, a utility provider that separately provides one utility, for example, hot water, may also acquire and process utility data of each household 201 through association with other utility providers.

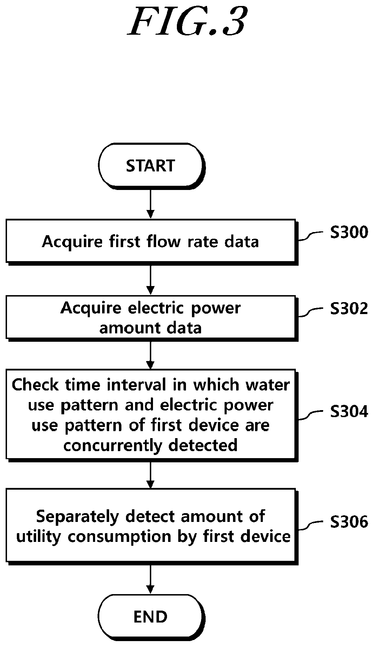

FIG. 3 is a flowchart of a method for separately detecting the amount of utility consumption by respective devices according to still another embodiment not covered by the claims.

Referring to FIG. 3, a calculation device may acquire first flow rate data corresponding to the hourly supply amount of first-type water supplied through a first supply pipe, in step 300. When the second-type water provided through a second supply pipe is additionally supplied to a household, the calculation device may additionally acquire second flow rate data corresponding to the hourly supply amount of the second-type water.

The calculation device may acquire electric power amount data corresponding to the hourly supply amount of electric power supplied through an electric power lead-in line, in step 302.

Further, the calculation device may identify a time interval in which a use pattern for the first-type water by a first device and a use pattern for electric power by the first device are concurrently detected, via analysis of the first flow rate data and the electric power amount data, in step 304.

For example, when the first device is a washing machine, and the first-type water is tap water, the calculation device may identify a use pattern for tap water of the washing machine in a specific time interval of first flow rate data, and may identify a use pattern for electric power of the washing machine in the same time interval.

Further, the calculation device may separately detect the amount of utility consumption by the first device in the corresponding time interval, in step 306.

For example, in the time interval in which the use pattern for tap water and the use pattern for electric power by the washing machine are concurrently detected, the amount of change in the amount of tap water consumption (for example, an increase in the amount of tap water consumption compared to the previous time interval) may be assumed to be the amount of tap water consumed by the washing machine. Further, the amount of change in the amount of electric power consumption (for example, an increase in the amount of electric power consumption compared to the previous time interval) in the corresponding time interval may be assumed to be the amount of electric power consumed by the washing machine.

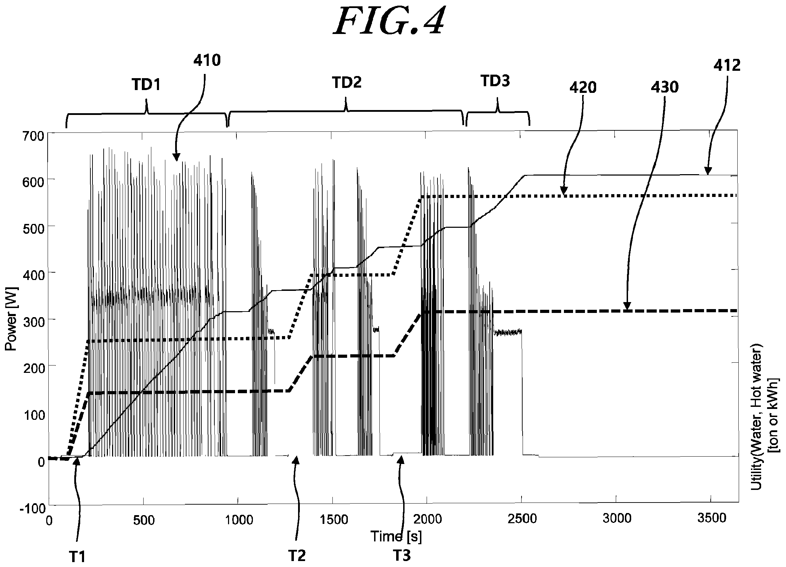

FIG. 4 a graphical representation of an example of a value included in utility data.

FIG. 4 shows an instantaneous electric power supply amount 410 per hour and a cumulative electric power supply amount 412, which are included in electric power amount data, shows a first cumulative supply amount 420 per hour, which is included in first flow rate data, and shows a second cumulative supply amount 430 per hour, which is included in second flow rate data.

The instantaneous electric power supply amount 410 represents an instantaneous value measured by an actual watt-hour meter. The instantaneous electric power supply amount 410 may display, at a predetermined interval, a value calculated in real time by the actual watt-hour meter, and the watt-hour meter may accumulate the calculated value therein and display the accumulated value as the cumulative electric power supply amount 412.

Referring to FIG. 4, a use pattern for electric power by a washing machine is detected in a first time interval TD1 of the instantaneous electric power supply amount 410 per hour. Here, the use pattern for electric power may correspond to the use pattern for electric power of the washing machine in an initial operating mode, for example, a washing mode. Further, a use pattern for first water type and a use pattern for second water type by the washing machine are detected in the first time interval TD1 (particularly, a first time point T1 in the first time interval TD1) of the first cumulative supply amount 420 per hour.

Here, the use pattern of electric power may be divided into the amount of electric power per hour, a use period of electric power, etc. and the use pattern of the first-type water and the use pattern of second-type water may be divided into the total amount of consumption for a predetermined time period, the amount of consumption per hour for the corresponding time period, etc. For example, when the total amount of consumption, A × T, is detected, which is obtained by supplying an hourly flow rate of A liters for T hours, the corresponding flow rate may be determined as a use pattern for water of the washing machine.

For a device, such as a washing machine, which concurrently consumes water and electric power as seen in the first time interval TD1, the amount of consumption may be separately detected easily and accurately by analyzing electric power amount data, first flow rate data, and second flow rate data in an integrated manner.

Referring to FIG. 4, likewise, in a second time interval TD2, a use pattern for electric power of the washing machine (for example, a use pattern for electric power of a rinsing mode) is detected in the electric power supply amount 410 per hour, a use pattern for the first-type water of the washing machine is detected in the first cumulative supply amount 420 per hour, and a use pattern for the second-type water of the washing machine is detected in the second cumulative supply amount 430 per hour.

Meanwhile, in a third time interval TD3 subsequent to the second time interval TD2, changes in the first cumulative supply amount 420 per hour and the second cumulative supply amount 430 per hour do not occur. In this case, it may be difficult to detect the use pattern of the first-type water or the use pattern of the second-type water of the washing machine.

However, when a use pattern for electric power of the washing machine (for example, a use pattern of electric power in a dehydration mode) is detected in the third time interval TD3, the calculation device may extract the amount of electric power consumption of the washing machine in the third time interval TD3. Since the third time interval TD3 is subsequent to the second time interval TD2 and the washing machine is likely to use only electric power without consuming water, the calculating device may estimate operation of the washing machine in the third time interval TD3 and may extract the amount of electric power consumption of the washing machine.

In the example described above, the use pattern for electric power of the washing machine is analyzed via the instantaneous electric power supply amount 410 per hour. However, depending on the embodiment, the use pattern for electric power of the washing machine may be detected via individual analysis of the cumulative electric power supply amount 412 or via simultaneous analysis with the instantaneous electric power supply amount 410.

Meanwhile, when a water use pattern is detected in flow rate data, the calculation device may separately detect the amount of utility consumption by respective devices using a method for determining whether an electric power use pattern is detected in a detection time interval.

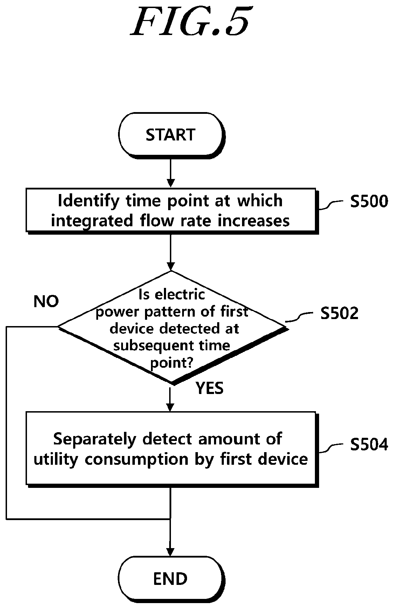

FIG. 5 is a flowchart of a method for separately detecting the amount of utility consumption by respective devices according to still another embodiment not covered by the claims.

Referring to FIG. 5, a calculation device may identify the time point at which an integrated flow rate increases in first flow rate data or second flow rate data, in step 500.

Further, the calculation device may determine whether an electric power use pattern of a specific device (for example, a first device) is detected in electric power amount data at the time point at which the integrated flow rate increases or a time point subsequent thereto.

In this case, when the electric power use pattern of the specific device is detected (YES in step 502), the calculation device may separately detect the amount of utility consumption of the specific device, in step 504.

Meanwhile, in relation to electric power, the calculation device may use a method for first separating the amount of electric power consumption of a base load and a periodic load, and then analyzing first flow rate data and/or second flow rate data together with electric power amount data in an integrated manner with respect to the remaining amount of electric power consumption, thereby separately detecting the amount of utility consumption by respective devices.

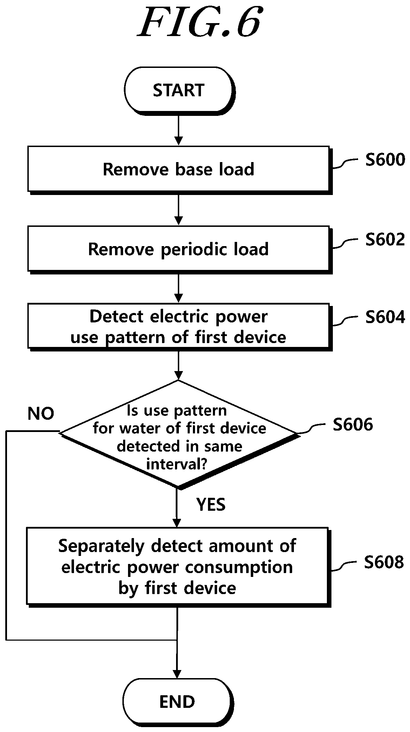

FIG. 6 is a flowchart of a method for separately detecting the amount of electric power consumption by respective devices according to an embodiment of the present invention.

Referring to FIG. 6, a calculation device separately detects the amount of electric power consumption of a device corresponding to a base load in electric power amount data, in step 600. The device corresponding to the base load may refer to a device, for example, a standby power device or a refrigerator, which constantly consumes electric power within a predetermined range. The calculation device may separately detect the amount of electric power consumption of the device corresponding to the base load by using a scheme of removing the amount of electric power consumption by the corresponding device from the electric power amount data while storing the same (for example, removing the amount of electric power consumption by the corresponding device from the amount of electric power consumption per hour).

Further, the calculation device separately detects the amount of electric power consumption of a device corresponding to a periodic load in the electric power amount data from which the base load has been removed, in step 602. The device corresponding to the periodic load may refer to a device, such as an electric rice cooker that keeps rice warm, which periodically consumes electric power within a predetermined range. The electric rice cooker periodically consumes electric power to generate heat, and this characteristic is recognized as a load having periodicity in the electric power amount data.

Further, the calculation device detects a time interval corresponding to a use pattern of electric power of a specific device (for example, a first device) in the electric power amount data from which the base load and the periodic load have been removed, in step 604.

Further, the calculation device determines, in step 606, whether a use pattern for first-type water or second-type water of the specific device is detected in the same interval, via analysis of first flow rate data or second flow rate data, and when the use pattern is detected (YES in step 606), the amount of electric power consumption by the first device is separately detected in the corresponding time interval, in step 608.

Further, in relation to the remaining electric power amount data, the calculation device may match the amount of electric power consumption by each device so as to separately detect the remaining electric power amount data.

Meanwhile, the calculation device may separately detect the amount of water consumption by each device in view of the amount of water consumption.

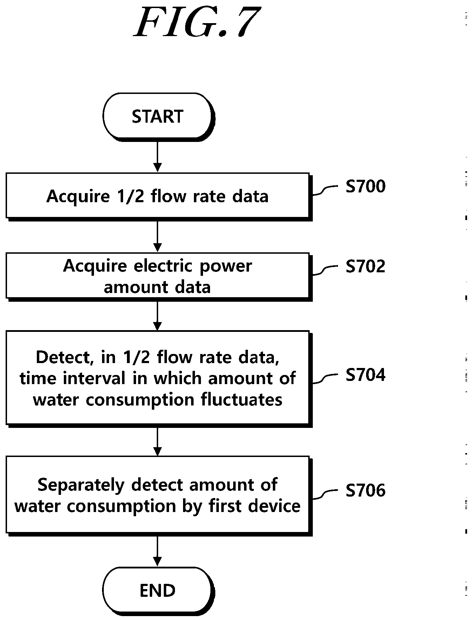

FIG. 7 is a flowchart of a method for separately detecting the amount of water consumption by each device according to still another embodiment not covered by the claims.

Referring to FIG. 7, the calculation device may acquire first flow rate data or second flow rate data, in step 700. Further, the calculation device may acquire electric power amount data, in step 702.

Further, the calculation device may detect a time interval, in which the amount of consumption of first-type water or second-type water fluctuates, in first flow rate data or second flow rate data, in step 704.

Further, when a use pattern for electric power of a specific device (for example, a first device) is detected in the electric power amount data in the time interval, the calculation device may separately detect the amount of consumption of the first-type water or second-type water of the specific device in the time interval, in step 706.

When the amount of water consumption is separately detected for each device, the calculation device may separately notify the same to a user.

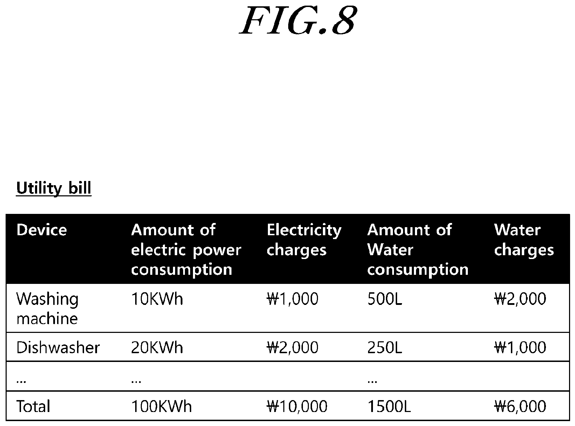

FIG. 8 is a diagram showing an example of separately providing notification of the amount of utility consumption by respective devices.

Referring to FIG. 8, the cumulative amount of consumption by each device along with the cumulative supply amount of water may be displayed on the bill. In addition, the cumulative amount of consumption by each device along with the cumulative supply amount of electric power may be displayed on the bill.

The bill may be issued via an offline medium, and may also be issued via an online medium, such as a user terminal.

A bill may be issued every period (for example, every month), and a user may access the bill in real time at a desired time.

Descriptions of a number of embodiments have been provided, and according to the embodiments, the amount of utility consumption may be separately detected for each device, a measurement value of a utility meter and a measurement value of an electric power meter may be analyzed in an integrated manner so as to improve the accuracy of separate detection of the amount of utility consumption by respective devices, and a user may be motivated to reduce utility consumption, by separate notification of the amount of utility consumption by respective devices.

In addition, since terms such as "including," "comprising," and "having" mean that one or more additional components may also exist unless a description is specifically made to the contrary, it shall be construed that one or more additional components can also be included. All terms used herein are to be understood according to technical, scientific or other meanings that would be understood by a person skilled in the art unless defined to the contrary. Common terms as found in dictionaries should be interpreted in the context of the related technical writings, rather than overly ideally or impractically, unless the present disclosure expressly defines them so.

Although a preferred embodiment of the present disclosure has been described for illustrative purposes, those skilled in the art will appreciate that various modifications, additions and substitutions are possible, without departing from the scope of the disclosure as disclosed in the accompanying claims.

## Claims

1. A method for separately detecting amounts of utility consumption by respective devices, the method comprising:
generating first flow rate data by checking a flow rate of first-type water supplied through a first supply pipe (4);
generating electric power amount data by checking electric power suppliec through an electric power lead-in wire (2); and
via analysis of the first flow rate data and the electric power amount data, identifying a time interval (TD1) in which a use pattern for the first-type water by a first device (10) and a use pattern for the electric power by the first device (10) are concurrently detected (S 604, S 606), and extracting, in the time interval, an amount of consumption of the first-type water and an amount of consumption of the electric power by the first device (10),
wherein when the electric power use pattern by the first device is detected in the electric power amount data, but the water use pattern for the first-type water by the first device is not detected in the first flow rate data, it is determined that the first device is not operated in said time interval, and it is analyzed whether another device has consumed electric power in said time interval,
wherein the method further comprises separately detecting (S 600) a base load, which represents constant consumption of electric power in a first range, in the electric power amount data,
said method being **characterized by**:
separately detecting a periodic load, which represents periodic consumption of electric power in a second range, in the electric power amount data from which the base load has been removed,
wherein the extracting of the amount of consumption of the first-type water and the amount of consumption of the electric power by the first device comprises extracting the amount of consumption of the first-type water and the amount of consumption of the electric power via analysis of the electric power amount data from which the base load and the periodic load have been removed (S 602).

2. The method of claim 1, wherein the first device (10) is a washing machine or a dishwasher, which concurrently consumes the first-type water and the electric power.

3. The method of claim 1 or 2, wherein the first flow rate data includes a cumulative supply amount (420) of the first-type water for each meter-reading time, and the electric power amount data includes a cumulative supply amount (412) of the electric power for each meter-reading time.

4. The method of any of claims 1 to 3, further comprising displaying, printing, or transmitting, to a user terminal, a cumulative amount of consumption during a first period for the first device along with the cumulative supply amount of the first-type water during said first period.

5. The method of any of claims 1 to 4, further comprising:
generating second flow rate data by checking a flow rate of second-type water supplied through a second supply pipe (6); and
when a use pattern for the second-type water by the first device is detected in the time interval via analysis of the second flow rate data, extracting an amount of consumption of the second-type water by the first device in the time interval.

6. The method of claim 5, wherein the first-type water and the second-type water have different temperatures.

7. The method of any of claims 1 to 6, wherein the extracting of the amount of consumption of the first-type water and the amount of consumption of the electric power by the first device comprises:
determining whether the first device has consumed the first-type water, by analyzing a total amount of consumption of the first-type water for a predetermined time period or analyzing an amount of consumption of the first-type water per hour for the predetermined time period; and
determining whether the first device has consumed the electric power, by analyzing an amount of consumption of the electric power per hour or analyzing a use period of the electric power.

8. The method of any of claims 1 to 7, further comprising, when a use pattern for electric power by the first device is detected in a subsequent time interval (TD2) of the time interval (TD1), extracting the amount of consumption of the electric power by the first device in the subsequent time interval (TD2).

9. The method of any of claims 1 to 8, wherein the base load is a standby electric power load or a refrigerator load, the periodic load is an electric rice cooker load, and the first device is a washing machine or a dishwasher.

## Patentansprüche

1. Ein Verfahren zum separaten Erfassen von Versorgungsverbrauchsmengen durch jeweilige Vorrichtungen, wobei das Verfahren aufweist:
Erzeugen von ersten Strömungsratendaten durch Überprüfen einer Strömungsrate von Wasser eines ersten Typs, das durch eine erste Zufuhrleitung (4) zugeführt wird;
Erzeugen von elektrischen Energiemengendaten durch Überprüfen von elektrischer Energie, die durch einen elektrischen Energiezufuhrdraht (2) zugeführt wird; und
über eine Analyse der ersten Strömungsratendaten und der elektrischen Energiemengendaten, Identifizieren eines Zeitintervalls (TD1), in dem ein Verwendungsmuster für das Wasser des ersten Typs durch eine erste Vorrichtung (10) und ein Verwendungsmuster für die elektrische Energie durch die erste Vorrichtung (10) gleichzeitig erfasst werden (S 604, S 606), und Extrahieren, in dem Zeitintervall, einer Verbrauchsmenge des Wassers des ersten Typs und einer Verbrauchsmenge der elektrischen Energie durch die erste Vorrichtung (10),
wobei, wenn das elektrische Energieverwendungsmuster durch die erste Vorrichtung in den elektrischen Energiemengendaten erfasst wird, aber das Wasserverwendungsmuster für das Wasser des ersten Typs durch die erste Vorrichtung in den ersten Strömungsratendaten nicht erfasst ist, bestimmt wird, dass die erste Vorrichtung nicht in dem Zeitintervall betrieben wird, und analysiert wird, ob eine andere Vorrichtung elektrische Energie in dem Zeitintervall verbraucht hat,
wobei das Verfahren ferner ein separates Erfassen (S 600) einer Basislast, die einen konstanten Verbrauch von elektrischer Energie in einem ersten Bereich darstellt, in den elektrischen Energiemengendaten aufweist,
wobei das Verfahren **gekennzeichnet ist, durch**:
separates Erfassen einer periodischen Last, die einen periodischen Verbrauch von elektrischer Energie in einem zweiten Bereich darstellt, in den elektrischen Energiemengendaten, aus denen die Basislast entfernt worden ist,
wobei das Extrahieren der Verbrauchsmenge des Wassers des ersten Typs und der Verbrauchsmenge der elektrischen Energie **durch** die erste Vorrichtung ein Extrahieren der Verbrauchsmenge des Wassers des ersten Typs und der Verbrauchsmenge der elektrischen Energie über eine Analyse der elektrischen Energiemengendaten aufweist, aus denen die Basislast und die periodische Last entfernt worden ist (S 602) .

2. Das Verfahren nach Anspruch 1, wobei die erste Vorrichtung (10) eine Waschmaschine oder eine Spülmaschine ist, die gleichzeitig das Wasser des ersten Typs und die elektrische Energie verbrauchen.

3. Das Verfahren nach Anspruch 1 oder 2, wobei die ersten Strömungsratendaten eine kumulative Zufuhrmenge (420) des Wassers des ersten Typs für jede Zählerablesezeit umfassen, und die elektrischen Energiemengendaten eine kumulative Zufuhrmenge (412) der elektrischen Energie für jede Zählerablesezeit umfassen.

4. Das Verfahren nach einem der Ansprüche 1-3, ferner mit einem Anzeigen, einem Drucken oder einem Übertragen an ein Nutzerendgerät, einer kumulativen Verbrauchsmenge während einer ersten Zeitdauer für die erste Vorrichtung zusammen mit der kumulativen Zufuhrmenge des Wassers des ersten Typs während der ersten Zeitdauer.

5. Das Verfahren nach einem der Ansprüche 1-4, ferner aufweisend:
Erzeugen von zweiten Strömungsratendaten durch Überprüfen einer Strömungsrate von Wasser eines zweiten Typs, das durch eine zweite Zufuhrleitung (6) zugeführt wird; und
wenn ein Verwendungsmuster für das Wasser des zweiten Typs durch die erste Vorrichtung in dem Zeitintervall über eine Analyse der zweiten Strömungsratendaten erfasst wird, Extrahieren einer Verbrauchsmenge des Wassers des zweiten Typs durch die erste Vorrichtung in dem Zeitintervall.

6. Das Verfahren nach Anspruch 5, wobei das Wasser des ersten Typs und das Wasser des zweiten Typs unterschiedliche Temperaturen aufweisen.

7. Das Verfahren nach einem der Ansprüche 1-6, wobei das Extrahieren der Verbrauchsmenge des Wassers des ersten Typs und der Verbrauchsmenge der elektrischen Energie durch die erste Vorrichtung aufweist:
Bestimmen, ob die erste Vorrichtung das Wasser des ersten Typs verbraucht hat, durch Analysieren einer Gesamtverbrauchsmenge des Wassers des ersten Typs für eine vorbestimmte Zeitdauer, oder Analysieren einer Verbrauchsmenge des Wassers des ersten Typs pro Stunde für die vorbestimmte Zeitdauer; und
Bestimmen, ob die erste Vorrichtung die elektrische Energie verbraucht hat, durch Analysieren einer Verbrauchsmenge der elektrischen Energie pro Stunde, oder Analysieren einer Verwendungszeitdauer der elektrischen Energie.

8. Das Verfahren nach einem der Ansprüche 1-7, ferner mit, wenn ein Verwendungsmuster für eine elektrische Energie durch die erste Vorrichtung in einem nachfolgenden Zeitintervall (TD2) des Zeitintervalls (TD1) erfasst wird, einem Extrahieren der Verbrauchsmenge der elektrischen Energie durch die erste Vorrichtung in dem nachfolgenden Zeitintervall (TD2).

9. Das Verfahren nach einem der Ansprüche 1-8, wobei die Basislast eine elektrische Energielast oder eine Kühlschranklast im Stand-by ist, wobei die periodische Last eine elektrische Reiskocherlast ist, und die erste Vorrichtung eine Waschmaschine oder eine Spülmaschine ist.

## Revendications

1. Procédé pour détecter séparément des quantités de consommation d'installation par des dispositifs respectifs, le procédé comprenant :
la génération de premières données de débit en vérifiant un débit d'eau de premier type amenée à travers un premier tuyau d'amenée (4) ;
la génération de données de quantité de puissance électrique en vérifiant la puissance électrique amenée à travers un fil d'entrée de puissance électrique (2) ; et
via une analyse des premières données de débit et des données de quantité de puissance électrique, l'identification d'un intervalle de temps (TD1) dans lequel un modèle d'utilisation pour l'eau de premier type par un premier dispositif (10) et un modèle d'utilisation pour la puissance électrique par le premier dispositif (10) sont détectés simultanément (S 604, S 606), et l'extraction, dans l'intervalle de temps, d'une quantité de consommation de l'eau de premier type et d'une quantité de consommation de la puissance électrique par le premier dispositif (10),
dans lequel, lorsque le modèle d'utilisation de puissance électrique par le premier dispositif est détecté dans les données de quantité de puissance électrique, mais que le modèle d'utilisation d'eau pour l'eau de premier type par le premier dispositif n'est pas détecté dans les premières données de débit, il est déterminé que le premier dispositif ne fonctionne pas dans ledit intervalle de temps, et il est analysé si un autre dispositif a consommé une puissance électrique dans ledit intervalle de temps,
dans lequel le procédé comprend en outre la détection séparée (S 600) d'une charge de base, qui représente une consommation constante de puissance électrique dans une première plage, dans les données de quantité de puissance électrique,
ledit procédé étant **caractérisé par** :
la détection séparée d'une charge périodique, qui représente une consommation périodique de puissance électrique dans une deuxième plage, dans les données de quantité de puissance électrique à partir desquelles la charge de base a été enlevée,
dans lequel l'extraction de la quantité de consommation de l'eau de premier type et de la quantité de consommation de la puissance électrique par le premier dispositif comprend l'extraction de la quantité de consommation de l'eau de premier type et de la quantité de consommation de la puissance électrique via une analyse des données de quantité de puissance électrique à partir desquelles la charge de base et la charge périodique ont été enlevées (S 602).

2. Procédé selon la revendication 1, dans lequel le premier dispositif (10) est une machine à laver ou un lave-vaisselle, qui consomme simultanément l'eau de premier type et la puissance électrique.

3. Procédé selon la revendication 1 ou 2, dans lequel les premières données de débit comportent une quantité d'amenée cumulée (420) de l'eau de premier type pour chaque temps de lecture de compteur, et les données de quantité de puissance électrique comportent une quantité d'amenée cumulée (412) de la puissance électrique pour chaque temps de lecture de compteur.

4. Procédé selon l'une quelconque des revendications 1 à 3, comprenant en outre l'affichage, l'impression ou la transmission, à un terminal utilisateur, d'une quantité cumulée de consommation pendant une première période pour le premier dispositif conjointement avec la quantité d'amenée cumulée de l'eau de premier type pendant ladite première période.

5. Procédé selon l'une quelconque des revendications 1 à 4, comprenant en outre :
la génération de deuxièmes données de débit en vérifiant un débit d'eau de deuxième type amenée à travers un deuxième tuyau d'amenée (6) ; et
lorsqu'un modèle d'utilisation pour l'eau de deuxième type par le premier dispositif est détecté dans l'intervalle de temps via une analyse des deuxièmes données de débit, l'extraction d'une quantité de consommation de l'eau de deuxième type par le premier dispositif dans l'intervalle de temps.

6. Procédé selon la revendication 5, dans lequel l'eau de premier type et l'eau de deuxième type ont des températures différentes.

7. Procédé selon l'une quelconque des revendications 1 à 6, dans lequel l'extraction de la quantité de consommation de l'eau de premier type et de la quantité de consommation de la puissance électrique par le premier dispositif comprend :
le fait de déterminer si le premier dispositif a consommé l'eau de premier type, en analysant une quantité totale de consommation de l'eau de premier type pendant une durée prédéterminée ou en analysant une quantité de consommation de l'eau de premier type par heure pendant la durée prédéterminée ; et
le fait de déterminer si le premier dispositif a consommé la puissance électrique, en analysant une quantité de consommation de la puissance électrique par heure ou en analysant une période d'utilisation de la puissance électrique.

8. Procédé selon l'une quelconque des revendications 1 à 7, comprenant en outre, lorsqu'un modèle d'utilisation pour la puissance électrique par le premier dispositif est détecté dans un intervalle de temps ultérieur (TD2) de l'intervalle de temps (TD1), l'extraction de la quantité de consommation de la puissance électrique par le premier dispositif dans l'intervalle de temps ultérieur (TD2).

9. Procédé selon l'une quelconque des revendications 1 à 8, dans lequel la charge de base est une charge de puissance électrique de secours ou une charge de réfrigérateur, la charge périodique est une charge de cuiseur à riz électrique, et le premier dispositif est une machine à laver ou un lave-vaisselle.
